# EUROPÄISCHE PATENTSCHRIFT

(11) **EP 3 008 434 B1**
(45) Veröffentlichungstag und Bekanntmachung des Hinweises auf die Patenterteilung: **02.08.2017**
(21) Anmeldenummer: 14741789.3
(22) Anmeldetag: 12.06.2014
(51) Int. Cl.: G01J 3/443, G01N 21/71, G01N 21/85, G01J 3/02, G02B 7/02, G01N 21/15

(54) **LIBS-MESSTUBUS**
LIBS MEASUREMENT TUBE
TUBE DE MESURE PAR LIBS

(30) Priorität: 14.06.2013 DE 102013009962
(43) Veröffentlichungstag der Anmeldung: 20.04.2016
(73) Patentinhaber: K+S Aktiengesellschaft, 34131 Kassel (DE)
(72) Erfinder: LISNER, Udo-Walter, 47441 Moers (DE); REST, Torsten, 36266 Heringen (DE); WÄCHTER, Jessica, 37269 Eschwege (DE); MAKOWE, Joachim, 52066 Aachen (DE); MÖRKENS, Volker, 52393 Hürtgenwald (DE); GEHLEN, Christoph Dominic, 52072 Aachen (DE)
(86) Internationale Anmeldenummer: PCT/DE2014/000300
(87) Internationale Veröffentlichungsnummer: WO 2014/198256

(56) Entgegenhaltungen:
- DE-A1-102009 028 254
- US-A- 5 452 070
- US-A- 5 453 832
- US-A1- 2009 262 345

## Beschreibung

Die Erfindung betrifft einen speziellen LIBS-Messtubus, der eine kontinuierliche Online-Analyse, speziell von Elementen im VUV-(Vakuum-UV)-Bereich, vorzugsweise Schwefel ermöglicht, eine diesen Messtubus umfassende Online-LIBS-Analyseeinheit, ihre Verwendung zur qualitativen und/oder quantitativen Online-Bestimmung einzelner oder mehrerer chemischer Elemente eines zu analysierenden Materials, speziell Schüttguts, insbesondere Roh-, Zwischen- und Endprodukte aus der Kali-, Magnesium- oder Stein- oder Siedesalzaufbereitung, das in einem horizontalen Strom am Messtubus vorbeibewegt wird, sowie ein entsprechendes Verfahren.

Die Laser-induzierte Plasmaspektroskopie (LIPS), auch als Laser-induced breakdown spectroscopy (LIBS) bezeichnet, stellt eine schnelle und berührungslose Messmethode zur Element-Analyse von festen, flüssigen oder gasförmigen Stoffen unter normalen Umgebungsbedingungen ohne besondere Probenvorbereitung dar.

Im Folgenden wird die Abkürzung "LIBS" verwendet. LIBS ist eine Atomemissionsspektroskopie, die einen Hochenergie-Laserpuls als Anregungsquelle verwendet. Der Laser wird auf ein zu analysierendes Material fokussiert. Liegt die Laserintensität dabei über einem bestimmten Grenzwert, so verdampft das Material, typischerweise im Nano- bis Mikrogramm-Bereich. Durch die weitere Lichtabsorption des energiereichen Laserpulses erhitzt sich die entstandene Mikrowolke auf hohe Temperaturen von typischerweise mehr als 10.000 °C, und es entsteht in Folge ein Mikro-Plasma an der Probenoberfläche, d. h. ein gasförmiges Gemisch aus Ionen, Elektronen und angeregten neutralen Atomen. Die angeregten Atome und Ionen im Plasma strahlen ein charakteristisches Spektrum, auch als "Fingerprint-Emissionsspektrum" bezeichnet, ab, das über eine schnelle spektroskopische Analyse nicht nur eine qualitative, sondern je nach Auswerteverfahren auch eine quantitative Analyse der Elementzusammensetzung des zu analysierenden Materials erlaubt. Mit dem LIBS-Verfahren ist es prinzipiell möglich, alle Elemente des Periodensystems nachzuweisen, sofern deren Elementspezifisches Emissionsspektrum bekannt ist.

Das LIBS-Verfahren ist prinzipiell nur durch die Laserleistung, durch Interferenzen wie z. B. Peakabsorption und/oder Peaküberlagerung sowie durch die Empfindlichkeit und den Wellenlängenbereich des Detektors limitiert. In der Praxis hängen die Detektionsgrenzen von der Plasmaanregungstemperatur, dem Lichtsammelfenster und der Linienstärke des betrachteten Übergangs ab.

Bei der Datenaufnahme wird typischerweise abgewartet, bis sich ein thermodynamisches Gleichgewicht im Plasma eingestellt hat und die Plasmatemperaturen im Bereich von 5.000 bis 20.000 °C liegen. Bei den hohen Temperaturen in der Anfangsphase des Plasmas dissoziiert das verdampfte Material in angeregte ionische und atomare Spezies. In dieser Zeit emittiert das Plasma ein Kontinuum von Strahlung, die nicht sinnvoll analysiert werden kann. Innerhalb eines sehr kleinen Zeitraums dehnt sich das Plasma mit Überschallgeschwindigkeit aus und kühlt ab. Zu diesem Zeitpunkt können die charakteristischen atomaren Emissionslinien der einzelnen Elemente beobachtet und analysiert werden. Der Zeitunterschied zwischen der Emission der kontinuierlichen Strahlung und der charakteristischen Strahlung liegt in der Größenordnung von 10 µs, so dass der Detektor entsprechend getaktet werden muss.

Ein typisches LIBS-System weist einen Nd:YAG-Feststofflaser und ein Spektrometer mit einem weiten Spektralbereich und einer hohen Empfindlichkeit, einer schnellen Antwortrate und einem Zeit-gesteuerten Detektor auf. Das LIBS-System wird mit einem Computer verbunden, der die aufgezeichneten Messdaten verarbeiten und auswerten kann.

Der Nd:YAG-Laser erzeugt gepulste Laserstrahlung mit einer Wellenlänge von 1.064 nm, wobei bei Pulsdauern im Bereich von 10 ns Leistungsdichten erreicht werden können, die 1 GW/cm² am Fokussierpunkt übersteigen können. Andere Laser, die für LIBS-Anwendungen eingesetzt werden können, sind Excimer-Laser, die Energie in sichtbarem Bereich und UV-Bereich des Spektrums erzeugen.

Das zur Analyse eingesetzte Spektrometer ist prinzipiell entweder aus einem Monochromator (mit Scanbetrieb) oder einem Polychromator (ohne Scanbetrieb) und einem Fotomultiplier oder CCD-Detektor aufgebaut. Ein häufig verwendeter Monochromator ist der Czerny-Turner-Typ. Häufig verwendete Polychromatoren sind solche des Echelle-Typs oder der Paschen-Runge-Anordnung. Auch der Monochromator des Czerny-Turner-Detektor-Typs kann eingesetzt werden, um die Strahlung auf einem CCD zu dispergieren, so dass ein Polychromator resultiert. Das Polychromator-Spektrometer ist der am häufigsten verwendete Typ in LIBS-Anwendungen, da es die simultane Aufnahme des gesamten Wellenlängenbereichs erlaubt, der von Interesse ist.

Mit den verschiedenen erhältlichen Spektrometer-Anordnungen kann zusammengefasst, analog eines ICP-Spektrometers, ein Gesamtwellenlängenbereich von etwa 170 nm (tiefes Ultraviolett) bis zu etwa 1100 nm (nahes Infrarot), entsprechend dem ungefähren Empfindlichkeitsbereich eines CCD-Detektors vermessen werden. In der Regel werden, anders als bei Verwendung eines ICP-Spektrometers, aus Gründen der Baugröße für einen LIBS-Messaufbau hingegen hauptsächlich Spektrometer-Anordnungen verwendet, die für einen definierten Wellenlängenbereich empfindlich sind und nicht den oben genannten Gesamtwellenlängenbereich abdecken.

Alle Elemente haben Emissionslinien in diesem Wellenlängenbereich. Je nach Güte der Messeinrichtung können auch benachbarte spektrale Emissionslinien aufgelöst werden. Durch Verminderung von Interferenzen kann die Selektivität erhöht werden.

Zusätzlich zum Spektrometer und zum Detektor wird ein Verzögerungsgenerator eingesetzt, der die Antwortzeit des Detektors verzögert, so dass ein zeitlicher Verlauf des Spektrums aufgelöst werden kann.

Da nur sehr geringe Mengen an zu analysierendem Material während der LIBS-Messung verbraucht werden, wird das Verfahren als nicht-destruktiv oder minimal-destruktiv angesehen. Durch wiederholte Entladung des Lasers auf dieselbe Position im Material können Tiefenprofile eines zu untersuchenden Materials erstellt werden. Hier können auch oberflächliche Verunreinigungen des Materials vor der eigentlichen Messung entfernt werden.

Das LIBS-Verfahren ist ein rein optisches Verfahren, so dass nur ein optischer Zugang zu dem zu untersuchenden Material notwendig ist. Bei Verwendung von Glasfaser-Optiken können damit die Strahlungsquelle und die Analyseneinheit von dem zu untersuchenden Material räumlich getrennt werden.

Die Vorteile des LIBS-Verfahrens liegen in der Schnelligkeit und Berührungslosigkeit, im geringen Probenabtrag sowie darin, dass praktisch keine Probenvorbereitung notwendig ist.

Als Auswertemethoden werden häufig multiple lineare Regression, Hauptkomponenten-Analyse (PCA-LIBS), PCA-LIBS in einem neuronalen Netzwerk oder Kalibrationsfrei-Verfahren (CF-LIBS) eingesetzt.

Die Durchführung der'Laser-Emissionsspektroskopie an bewegten Objekten ist an sich bekannt. Die DE-A-10 2008 032 532 beschreibt ein Verfahren und eine Vorrichtung zum präparierenden Lasermaterial-Abtrag, das eine Probenvorbereitung durch Materialabtrag vor der eigentlichen Laser-Emissionsspektroskopie erlaubt.

In US 2009/0262345 A1 wird die Verwendung von röhrenförmigen Sonden, die in die Probe eintauchen, in Kombination mit LIBS-Untersuchungen beschrieben.

In technischem Umfang wird LIBS bisher häufig zur Analyse von Recycling-Metall eingesetzt.

Bei der Herstellung von hochreinem Salz (NaCl in Pharmaqualität, d. h. nach Ph. Eur.) ist der Sulfatgehalt einer der wichtigsten Qualitätsparameter. Nach dem Europäischen Arzneibuch (Pharmakopöe) liegt der Grenzwert bei 200 ppm Sulfat im Pharmasiedesalz.

Der Sulfatgehalt wird beispielsweise offline turbidimetrisch bestimmt. Von der Probennahme bis zum Erhalt des dazugehörigen Labor-Messwerts vergeht etwa eine Stunde, so dass bei einer Grenzwert-Überschreitung für Sulfat nicht ausreichend schnell reagiert werden kann. Kommt es zur Überschreitung eines noch niedriger festgelegten, internen Grenzwertes für Sulfat, so wird der Probennahme-Zyklus typischerweise von mehrstündig auf einstündig erhöht, bis der Sulfatgehalt wieder unterhalb des internen Grenzwertes liegt. Der Zeitversatz zwischen Probennahme und Vorliegen des Messwerts ist nachteilig.

Aufgabe der vorliegenden Erfindung ist daher die Bereitstellung eines Analyseverfahrens und einer Analysevorrichtung, womit die Zusammensetzung und insbesondere der Schwefel- bzw. Sulfatgehalt unter Inertgasatmosphäre, insbesondere von Roh-, Zwischen- und Endprodukten aus der Kali-, Magnesium- oder Stein- oder Siedesalzaufbereitung, beispielsweise von hochreinem Salz mit einer kürzeren Zeitverzögerung bestimmt werden können. Vorzugsweise soll eine Online-Echtzeit-Analyse möglich sein. Dabei soll die Analyse in einfacher Weise in einem zu analysierenden Material, speziell Schüttgut, insbesondere Roh-, Zw ischen- und Endprodukte aus der Kali-, Magnesium- oder Stein- oder Siedesalzaufbereitung, möglich sein.

Dabei soll die Analyse in einfacher Weise in einem zu analysierenden Material möglich sein, das in einem horizontalen Strom bewegt wird, beispielsweise in einem Salz, das mit einem Förderband gleichmäßig bewegt wird.

Eine weitere Aufgabe der vorliegenden Erfindung ist die Bereitstellung einer Vorrichtung, die in Verbindung mit einem Optikmodul, welches für LIBS-Messungen geeignet ist, eine Analyse der Zusammensetzung, insbesondere von Roh-, Zwischen- und Endprodukten aus der Kali-, Magnesium- oder Stein- oder Siedesalzaufbereitung, beispielsweise von hochreinem Salz mit einer kürzeren Zeitverzögerung ermöglicht. Vorzugsweise soll eine Online-Echtzeit-Analyse möglich sein. Dabei soll die Analyse in einfacher Weise in einem zu analysierenden Material, speziell Schüttgut, insbesondere Roh-, Zwischen- und Endprodukte aus der Kali-, Magnesium- oder Stein- oder Siedesalzaufbereitung, möglich sein, wobei das zu analysierende Material in einem horizontalen Strom bewegt wird.

Die Aufgabe wird erfindungsgemäß gelöst durch eine spezielle LIBS-Messtubus-Fokussiereinheit, im Weiteren auch (verkürzt) Messtubus genannt, gemäß Anspruch 1.

Bei dem zu analysierenden Material handelt es sich vorzugsweise um Roh-, Zwischen- und Endprodukte aus der Kali-, Magnesium- oder Stein- oder Siedesalzaufbereitung. Das Salz kann durch eine chemische Umsetzung erhalten werden.

Der Messtubus ist dabei vorzugsweise an die Online-LIBS-Schwefel- bzw. Sulfatanalyse in Roh-, Zwischen- und Endprodukten aus der Kali-, Magnesium- oder Stein- oder Siedesalzaufbereitung angepasst.

Die Aufgabe wird zudem gelöst durch eine Online-LIBS-Analyseeinheit, umfassend
einen LIBS-Messtubus, wie er vorstehend beschrieben ist,
eine Laserstrahlquelle,
eine Spektrometereinheit für die Erfassung des LIBS-Emissionsspektrums, mit Analyseoptik für den Spektralbereich von 170-590 nm und ggf. für einen Nachweis im IR-Bereich,
optische Bauelemente zum Einkoppeln des Laserstrahls in den Messtubus und Auskoppeln des Emissionsspektrums aus dem Messtubus (Teil der Fokussieroptik),
eine Steuerelektronik zum Betrieb der Laserstrahlquelle und Detektoreinheit sowie zur Messwerterfassung,
eine, vorzugsweise pneumatische; Antriebseinheit für eine automatisierte Relativbewegung des Fokussiertubus gegenüber den Abstreifern,
eine Vorrichtung zum Einspeisen von Inertgas in den Messtubus, welches die Detektion der Spektren von Elementen, die im VUV-Bereich emittieren, vorzugsweise von Schwefel, erst möglich macht.

Die Aufgabe wird zudem gelöst durch die Verwendung eines derartigen Messtubus oder einer derartigen Online-LIBS-Analyseeinheit zur qualitativen und/oder quantitativen Online-Bestimmung einzelner oder mehrerer chemischer Elemente eines zu analysierenden Materials, speziell Schüttguts, insbesondere Roh-, Zwischen- und Endprodukte aus der Kali-, Magnesium- oder Stein- oder Siedesalzaufbereitung, das in einem horizontalen Strom am Messtubus vorbeibewegt wird.

Die Aufgabe wird zudem gelöst durch ein Verfahren zur qualitativen und/oder quantitativen Online-Bestimmung einzelner oder mehrerer chemischer Elemente eines zu analysierenden Materials, speziell Schüttguts, insbesondere Roh-, Zwischen- und Endprodukte aus der Kali-, Magnesium- oder Stein- oder Siedesalzaufbereitung, das in einem horizontalen Strom bewegt wird, mit einer Online-LIBS-Analyseeinheit, wie sie vorstehend beschrieben ist, bei dem man den LIBS-Messtubus vertikal in einem horizontalen Strom bewegtes, zu analysierendes Material, speziell Schüttgut, insbesondere Roh-, Zwischen- und Endprodukte aus der Kali-, Magnesium- oder Stein- oder Siedesalzaufbereitung, eintaucht, mithilfe der Laserstrahlquelle einen Laserstrahl erzeugt und auf das zu analysierende Material im Messtubus fokussiert, so dass ein durch die Laserstrahlung erzeugtes Plasma des zu analysierenden Materials, speziell Schüttguts, insbesondere Roh-, Zwischen- und Endprodukte aus der Kali-, Magnesium- oder Stein- oder Siedesalzaufbereitung, innerhalb des Messtubus gebildet wird und das Emissionsspektrum des zu analysierenden Materials durch das Innere des Messtubus zum Auslass zum Auskoppeln in die Detektoreinheit gelangt und dort eine Messwerterfassung erfolgt.

Es wurde festgestellt, dass mittels LIBS eine Haupt- und/oder Spurenelement-Bestimmung in Salzen,- insbesondere Pharmasiedesalz und Kalisalz, möglich ist, sofern ein erfindungsgemäßer Messtubus eingesetzt wird, wobei die Salze, typischerweise auf einem Förderband, in einem horizontalen Strom bewegt werden.

Der erfindungsgemäße LIBS-Messtubus und die Online-LIBS-Analyseeinheit erlauben die Bestimmung von Haupt- und/oder Spurenelementen in Salzen, beispielsweise Kali- und Pharmasiedesalz, mit hoher Genauigkeit und Zuverlässigkeit im Online-Echtzeit-Betrieb. Die Online-Analyse von Haupt-, Neben- und Spurenelementen in Rohstoffen, Zwischen- und Endprodukten der Kali- und Steinsalzindustrie ist möglich. Auch die Online-Bestimmung von im UV-Bereich emittierenden Elementen wie Schwefel unter Schutzgasatmosphäre ist möglich. Insbesondere ist bei Salzen die Analytik von K, Na, Ca, Mg und S möglich. Die Bestimmung von S muss dabei typischerweise unter Inertgasatmosphäre (wie beispielsweise auch bei C und P) erfolgen.

Die Online-Bestimmung von Schwefel im Spurenbereich mittels LIBS ist mit hinreichender Messgenauigkeit vorzugsweise im UV- bzw. VUV-Wellenlängenbereich durchzuführen. Aufgrund der Absorption der Element-spezifischen Wellenlängen durch Luft muss diese Bestimmung vorzugsweise unter Inertgasatmosphäre durchgeführt werden.

Als Inertgase kommen erfindungsgemäß bevorzugt Stickstoff oder Argon in Betracht.

Durch die Bestimmung von Schwefel ist damit der Sulfat-Gehalt des Salzes, z. B. von Pharmasiedesalz, zugänglich.

Das erfindungsgemäße Verfahren erlaubt eine Quasi-Echtzeit-Prozesskontrolle und Prozessanpassung oder Prozessoptimierung bei Abweichung von Grenzwerten. Das Messsystem kann dabei anwendungsspezifisch und optional unter Verwendung von Schutzgas, beispielsweise oberhalb eines Förderbandes oder Drehtellers installiert werden. Die Analyse wird hierbei kontinuierlich an bewegtem Probenmaterial durchgeführt. Die Analysenergebnisse stehen online zur Verfügung und können damit an das jeweilige Prozessleitsystem übergeben werden. Erfindungsgemäß wird ein LIBS-Messtubus beschrieben, der zum vertikalen Eintauchen in ein in einem horizontalen Strom bewegtes, zu analysierendes Material, vorgesehen ist. Der Begriff "vertikal" umfasst dabei erfindungsgemäß Abweichungen von der Vertikalen um ± 44°, vorzugsweise ± 22°, insbesondere ± 11°, speziell ± 5°.

Der Begriff "horizontal" umfasst erfindungsgemäß Abweichungen von der Horizontalen von ± 44°, vorzugsweise ± 22°, insbesondere ± 11°, speziell ± 5°.

Die Anordnung des Messtubus und des im Strom bewegten, zu analysierenden Materials ist vorzugsweise so, dass sich ein gleichmäßiger Strom des zu analysierenden Materials ergibt und ein Eintauchen des unteren Teils des Messtubus in den Strom des zu analysierenden Materials möglich ist, um an der Eintauchstelle eine Analyse des zu analysierenden Materials, z. B. im VUV-Bereich, wie bei Schwefel, vorzunehmen.

Besonders bevorzugt erfolgt ein vertikales Eintauchen des Messtubus in einen horizontalen Strom des zu analysierenden Materials, d. h. zwischen beiden Richtungen besteht ein Winkel von 90° ± 20°, vorzugsweise ± 10°, insbesondere ± 5°.

Der Messtubus erstreckt sich vertikal im oben genannten Sinne. Er hat eine Ausdehnung in der vertikalen Richtung, um einen Abstand zwischen dem Einlass zum Einkoppeln des Laserstrahls und dem Auslass zum Auskoppeln des Emissionsspektrums und der Probenoberfläche, d. h. der Oberfläche des zu analysierenden Materials, zu ermöglichen. Vorzugsweise beträgt der Abstand der letzten Optik des Messsystems zur mittleren Materialoberfläche mindestens 50 mm, vorzugsweise mindestens 100 mm, insbesondere mindestens 200 mm. Typischerweise kann der Abstand der letzten Optik des Messsystems zur mittleren Materialoberfläche etwa 250 mm betragen.

Der Fokussiertubus kann jede beliebige geeignete Form aufweisen. Typischerweise ist er rohrförmig ausgeführt mit einem beliebigen Querschnitt. Bevorzugt ist ein elliptischer, oder insbesondere kreisförmiger Querschnitt des Fokussiertubus.

Unter "am oberen Ende" wird ein Bereich oberhalb der Mitte des Messtubus (bei vertikaler Ausrichtung) verstanden, vorzugsweise im oberen Drittel des Messtubus, insbesondere im oberen Viertel des Messtubus. Besonders bevorzugt sind der Einlass und der Auslass möglichst nah am oberen Ende des Messtubus angeordnet.

Der Ausdruck "im unteren Bereich", wie er erfindungsgemäß beim Abstreifen des Fokussiertubus verwendet wird, bezeichnet einen Bereich unterhalb der Mitte des Messtubus (in vertikaler Richtung gesehen), vorzugsweise das untere Drittel, besonders bevorzugt das untere Viertel des Messtubus.

Die Plasmaerzeugung und Gewinnung des Emissionsspektrums erfolgen innerhalb des Messtubus, für Messungen von Elementen unter Schutzgasatmosphäre vorzugsweise dann, wenn das untere Ende des Messtubus in das zu analysierende Material eingetaucht ist. Für die Messdurchführung wird der Laserstrahl auf das zu analysierende Material bzw. seine Oberfläche fokussiert. Dies kann beispielsweise mithilfe einer Autofokus-Vorrichtung erfolgen.

Das im horizontalen Strom bewegte, zu analysierende Material kann vorzugsweise als Feststoff, Gas, Gel, Sol, Dispersion, Flüssigkeit oder Gemisch davon vorliegen, speziell als Schüttgut, insbesondere als Roh-, Zwischen-, und Endprodukt aus der Kali-, Magnesium- oder Stein- oder Siedesalzaufbereitung. Sofern das zu analysierende Material an sich nicht fließfähig ist, liegt es vorzugsweise in einer so fein verteilten Form vor, dass es auf einem Förderband liegen kann, bzw. rieselfähig ist. Besonders bevorzugt handelt es sich bei dem zu analysierenden Material um einen Feststoff, speziell ein Schüttgut, insbesondere ein Roh-, Zwischen-, und Endprodukt aus der Kali-, Magnesium- oder Stein- oder Siedesalzaufbereitung, der insbesondere teilchenförmig vorliegt. Die mittlere Teilchengröße liegt dabei vorzugsweise im Bereich von 0,5 bis 10 mm, besonders bevorzugt 2 bis 4 mm, insbesondere 0,5 bis 1 mm.

Durch das Eintauchen des Messtubus in den Strom des zu analysierenden Materials, insbesondere Schüttgut, insbesondere als Roh-, Zwischen-, und Endprodukt aus der Kali-Magnesium- oder Stein- oder Siedesalzaufbereitung, kann es, speziell bei Schüttgütern mit einem Feuchtegehalt > 1 %, zu Anhaftungen des zu analysierenden Materials am Messtubus kommen. Typischerweise tritt dies an Stellen im Bereich des Eintauchens des Messtubus auf, d. h. an seinem unteren, inneren Ende. Da sich bei einem Eintauchen des unteren Messtubus-Teils im zu analysierenden Material eine Welle des Materials oder Schüttguts an der Einströmseite ausbilden kann, können insbesondere bei Schüttgütern aus der Kali-, Magnesium- oder Stein- oder Siedesalzaufbereitung mit einem Feuchtegehalt > 1 % durch stetiges Anwachsen auch Anhaftungen/Anbackungen oberhalb der Eintauchposition ausgebildet werden.

Die Anhaftungen können die LIBS-Analytik beeinträchtigen, derart, dass am unteren, inneren Ende des Messtubus es zu zunehmenden Anhaftungen/Anbackungen kommt und das anhaftende Material die Analysegenauigkeit des frisch anströmenden, zu analysierenden Materials, speziell Schüttguts, insbesondere Roh-, Zwischen-, und Endprodukte aus der Kali-, Magnesium-, oder Stein- oder Siedesalzaufbereitung, stark minimiert oder die Analyse dessen gar verhindert.

Daher weist der Messtubus an der inneren und äußeren Tubuswand ringförmige Abstreifer auf. Diese werden gegenüber dem Fokussiertubus vertikal verschoben, so dass durch eine Relativbewegung des Fokussiertubus gegenüber den Abstreifern im unteren Bereich innen und außen am Messtubus anhaftendes, zu analysierendes Material von diesem abgestreift werden kann. Das Abstreifen erfolgt dabei insbesondere in dem Bereich des Fokussiertubus, über den die Abstreifer bewegt werden.

Es ist erfindungsgemäß möglich, die Abstreifer über einen feststehenden Tubus zu bewegen. Bevorzugt ist es jedoch, die inneren und äußeren Abstreifer unbewegt vorzusehen und den Fokussiertubus zwischen den Abstreifern hoch- und herunterzufahren, um hierdurch ein Abstreifen zu bewerkstelligen.

Die Abstreifer liegen ringförmig am inneren und äußeren Fokussiertubuswand an. Die vertikale Höhe der Abstreifer kann dabei nach praktischen Erfordernissen gewählt werden. Bei der Relativbewegung des Fokussiertubus gegenüber den Abstreifern, streifen diese an der Innen- und Außenwand des Fokussiertubus im unteren Bereich entlang und lösen damit am Messtubus anhaftende Teilchen des zu analysierenden Materials ab. Um eine optimale Funktionsweise der Abstreifer zu gewährleisten, liegen sie vorzugsweise so am Fokussiertubus an, dass sie im Messbetrieb nicht in den horizontalen Strom des zu analysierenden Materials eintauchen. Andererseits ist auch bei einem Eintauchen der Abstreifer durch die Relativbewegung noch eine Reinigung des Fokussiertubus möglich.

Die besonders bevorzugte Bewegung des Fokussiertubus relativ zu den feststehenden Abstreifern beim Abstreifvorgang ermöglicht es, für eine erneute Messung den Messtubus in den sich weiter bewegenden Strom einzutauchen, so dass in zeitlichen Abständen die jeweils von der Messposition auf einem Förderband vorliegende Salzzusammensetzung untersucht wird.

Während der Messung taucht der Messtubus vorzugsweise so tief in das zu analysierende Material ein, dass die Unterkante des Messtubus vollständig in das zu analysierende Material eintaucht.

Es hat sich als vorteilhaft.herausgestellt, das untere Ende des Messtubus abzuschrägen, so dass die Unterkante des Messtubus an der Anströmseite des Stroms des zu analysierenden Materials tiefer in diesen Strom eintaucht als an der Abströmseite. Hierdurch wird ein verstärktes Einströmen des zu analysierenden Materials in den Messtubus und ein Aufsteigen im Messtubus zuverlässig verhindert.

Die Abstreifbewegung kann auf beliebige geeignete Weise angetrieben werden. Vorzugsweise weist der Messtubus eine, vorzugsweise pneumatische, Antriebseinheit für eine automatisierte Relativbewegung des Fokussiertubus gegenüber den Abstreifern auf.

Ferner ist es vorteilhaft, eine Steuer- und Regeleinheit zur Automatisierung des Abstreifens vorzusehen.

Die Abstreifbewegung kann in regelmäßigen, variabel taktbaren Zeitabständen während der LIBS-Messungen im Online-Betrieb erfolgen.

Damit können LIBS-Messungen im Online-Betrieb durchgeführt werden, wobei während der LIBS-Messungen am Messtubus anhaftendes zu analysierendes Material, vorzugsweise automatisiert, von diesem abgestreift wird durch eine Relativbewegung des Fokussiertubus gegenüber den Abstreifern.

Gemäß einer bevorzugten Ausführungsform weist der Messtubus einen Einlass zum Einspeisen von Inertgas auf. Hierdurch ist es möglich, mit dem LIBS-Analyseverfahren unter Inertgas zu arbeiten und zwar im Online-Betrieb. Dies ist beispielsweise bei der Schwefelbestimmung im UV-Bereich notwendig.

Dabei ist es bevorzugt bei diesen Messungen den gesamten Messtubus mit Inertgas zu füllen. Damit nicht zu viel Inertgas entweicht, kann dazu die Unterkante des Messtubus in das zu analysierende Material vollständig eintauchen. Sofern ein hinreichender Strom an Inertgas sichergestellt ist, kann die Unterkante des Messtubus jedoch auch teilweise oder vollständig oberhalb des zu analysierenden Materials liegen, sofern der Zutritt von Luft bzw. Luftsauerstoff im Bereich zwischen Materialoberfläche und oberem Ende des Messtubus (innen) verhindert wird.

Da die Schütthöhe des bewegten Stroms des zu analysierenden Materials variieren kann, ist es vorteilhaft; in der Online-LIBS-Analyseeinheit ein Autofokussystem vorzusehen, dass zur Anpassung des Messabstands zum zu analysierenden Material dient.

Der erfindungsgemäße Messtubus, die erfindungsgemäße Analyseeinheit und das erfindungsgemäße Verfahren können auf beliebige geeignete zu analysierenden Materialien angewendet werden. Vorzugsweise handelt es sich beim zu analysierenden Material um einen Feststoff, ein Gas, ein Gel, ein Sol, eine Dispersion, eine Flüssigkeit oder Gemische davon. Bevorzugt ist das zu analysierende Material ein Salz, insbesondere Roh-, Zwischen- oder Endprodukt aus der Kali-, Magnesium- oder Stein- oder Siedesalzaufbereitung.

Insbesondere wird mit dem erfindungsgemäßen Verfahren der Schwefelgehalt eines Salzes im Online-Betrieb unter Inertgasatmosphäre bestimmt.

Die LIBS-Analyse kann erfindungsgemäß wie in der Beschreibungseinleitung angegeben erfolgen. Bevorzugte Auslegungen des erfindungsgemäßen Messtubus und der Analyseeinheit sind nachstehend angegeben.

Das Messsystem verfügt bevorzugt über eine automatische Steuerung und kann dem übergeordneten Prozessleitsystem den jeweils aktuellen Zustand signalisieren (beispielsweise Standby, Bereit, Messung läuft, Fehler). Zusätzlich werden Selbsttests zur Funktionsbereitschaft durchgeführt.

Das Messsystem führt automatisch Messungen an bewegtem Material, beispielsweise auf einem Förderband, durch.

Während der Prüfung der Materialoberfläche wird die Materialoberfläche mit Laserstrahlung beaufschlagt, die eine Emission von Plasmastrahlung induziert. Diese wird in einer Analyseoptik detektiert und mit der integrierten Signalelektronik und Steuersoftware ausgewertet.

Das Messsystem ist dazu ausgelegt um die Messergebnisse an ein übergeordnetes Prozessleitsystem zu übertragen.

Die Rekalibrierung und Prüfmittel-Überwächung wird in festgelegten Zeitabständen ausgeführt.

Sämtliche Messwerte, Prüfergebnisse sowie Informationen zum Anlagenzustand werden protokolliert.

Das Laser-basierte Online-Messsystem und die kontinuierliche Analyse erlauben eine Quasi-Echtzeit-Prozesskontrolle und Prozessoptimierung.

Die Analyseoptik erlaubt vorzugsweise eine Analyse im Spektralbereich. von 170 bis 590 nm und gegebenenfalls auch im IR-Bereich. Das Messsystem prüft unter Verwendung des Verfahrens der LIBS kontinuierlich das vorliegende Material, beispielsweise auf einem Förderband. Die ermittelten Elementgehalte stehen dem Systembenutzer online zur Verfügung.

Das Messsystem besteht aus den Baugruppen Gehäuse, Laserstrahlquelle, Optiken inkl. des Messtubus, Autofokussystem, Steuerelektronik, Software sowie Schutzeinrichtungen.

Das Gehäuse dient zur Aufnahme aller optischen und elektronischen Komponenten sowie der Medien- und Benutzerschnittstellen. Die Gehäuse, einschließlich der Kabeleinführung, sind vorzugsweise strahlwassergeschützt, staubdicht, lasersicher und temperaturstabilisiert.

Der Messtubus schützt die Optiken vor Verschmutzung und ermöglicht darüber hinaus eine Elementbestimmung unter Inertgasatmosphäre im VUV-Bereich. Der Messtubus ist Bestandteil der Fokussieroptik und an das Optikmodul, das u. a. aus Laser, Optiken und Spektrometer besteht angeflanscht.

Als Laser wird eine gepulste Nd:YAG-Laserstrahlquelle (Laserklasse 4) mit mittlerer optischer Leistung von maximal 30 W zur Anregung der elementspezifischen optischen Emission eingesetzt. Ein Autofokussystem dient der Anpassung des Messabstandes z. B. an unterschiedliche Bandbelegungen. Es besteht aus Abstandssensoren und Verfahr-Einheiten, die die Fokussierung des Laserstrahls auf die Materialoberfläche sicherstellen.

Die Steuerelektronik dient der Ablaufsteuerung.

Eine Steuersoftware dient ebenso der Ablaufsteuerung, Anbindung an ein Prozessleitsystem, Steuerung und Bedienung des Messsystems, Auswertung der Messwerte, Kalibrierung, Rekalibrierung, Prüfmittelüberwachung, als Schnittstelle zum Prozessleitrechner, als Protokoll-Funktion, Einrichtungsbetrieb und zur Fernwartung.

In der Praxis werden vorzugsweise Schutzeinrichtungen vorgesehen, die zum Schutz vor Laserstrahlung und beweglichen Teilen durch Interlockkreis, Sicherheitssperrklinken, usw. dienen.

Es ist möglich, den gepulsten Laserstrahl derart bewegungssynchron mit einem vorselektierten Messpunkt aus dem bewegten, zu analysierenden Material zu führen, dass aufeinanderfolgende Laserpulse oder Laserbursts mehrmals nacheinander auf dieselbe Probenstelle appliziert werden können. Hierdurch ist zum einen eine tiefengestaffelte Analyse des Materials möglich, und oberflächliche Anhaftungen können entfernt werden.

Damit ist es bei Verwendung eines Verfahrens und einer Vorrichtung, für deren genaue Beschreibung auf die DE-A-10 2008 032 532 verwiesen werden kann, möglich, mittels gepulstem Laserstrahl einen präparierenden Lasermaterialabtrag, selbst an bewegten Messobjekten durchzuführen.

Es ist prinzipiell auch möglich, an mehreren Messorten innerhalb des Messtubus Messungen durchzuführen. Eine entsprechende Verfahrensführung ist beispielsweise in der DE-A-10 2004 051 310 beschrieben.

Ferner ist es möglich, die LIBS-Messung mit einer Laser-induzierten Fluoreszenz-Messung (LIS-Messung) zu kombinieren, wie es beispielsweise in DE-A-10 2004 051 311 beschrieben ist.

Ferner ist es möglich, doppelt-gepulste Lasersysteme einzusetzen, die in orthogonaler oder senkrechter Konfiguration vorliegen können. Es kann so beispielsweise eine Signalverstärkung erreicht werden, wie sie sonst nur durch Arbeiten bei verminderten Drücken möglich ist.

Die vorliegende Erfindung wird durch das nachstehende Beispiel näher erläutert.

### Beispiel 1

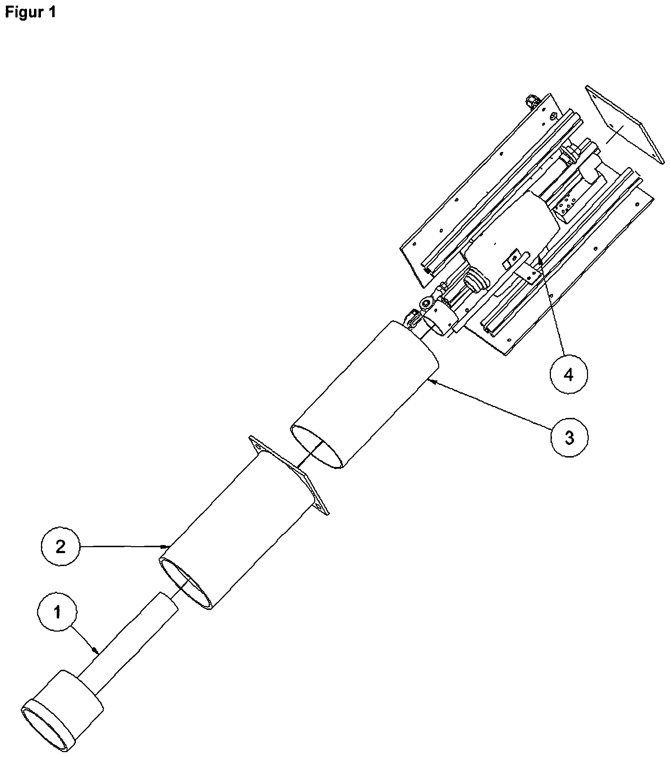

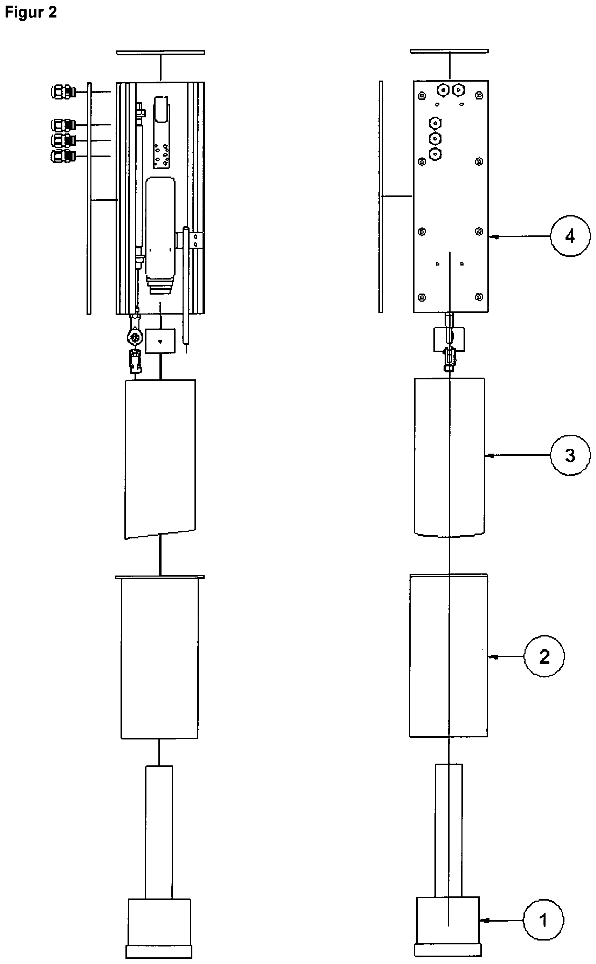

Der Messtubus wurde mit dem Grundgedanken entwickelt, dass er aus einem Doppelrohrsystem besteht, bei dem ein Fokussiertubus im realen Online-Betrieb für die benötigte Inertgasatmosphare möglichst nah über der Salzoberfläche, aber mit möglichst wenig Oberflächenkontakt mittels Autofokus betrieben werden soll, oder alternativ in das Salz eintauchen soll. Sofern es zum Kontakt zwischen Fokussiertubus und Salz kommt, wurde für die grundlegenden Tests ein Doppelrohr mit manuellem Innenrohrabstreifer (im Online-Betrieb kann das Abstreifen automatisiert und zeitlich getaktet erfolgen) gefertigt (manueller Messtubus). Das Außenrohr stellte den äußeren Abstreifer dar. Im Innenrohr (entspricht dem Fokussiertubus) war ein weiteres Rohr als innerer Abstreifer vorgesehen. Figur 1 und 2 zeigen den schematischen Aufbau des auf Grundlage des manuellen Messtubus gefertigten, automatisierten Messtubus als Explosionsskizze mit den folgenden Bezugszeichen:
- 1: Abstreifer innen
- 2: Abstreifer außen
- 3: Fokussiertubus
- 4: Steuer- und Auswertelogik

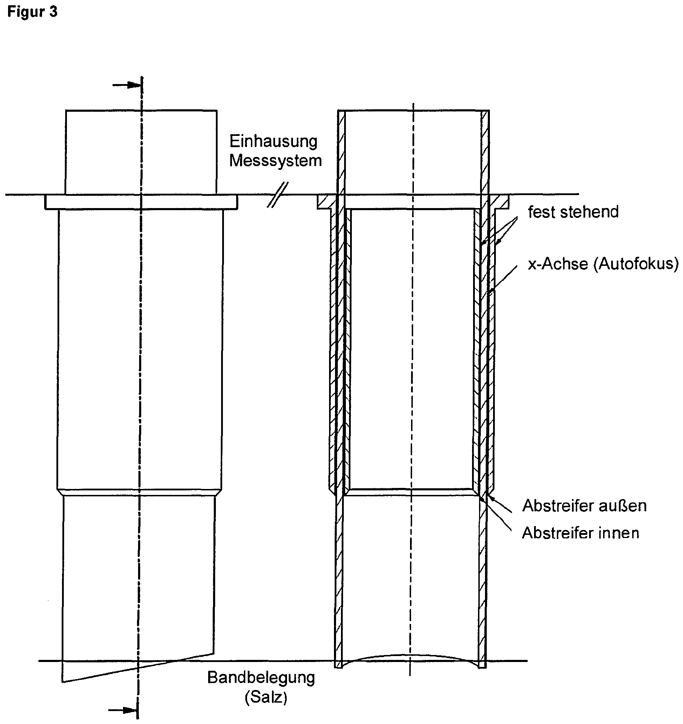

Figur 3 zeigt eine Draufsicht und Querschnittsansicht des manuellen Messtubus mit Abstreifern.

Der Einbau des manuellen Messtubüs erfolgte vertikal über einem horizontalen Förderband. Auf dem Förderband wurde Siedenasssalz gefördert.

Der manuelle Messtubus wurde zunächst so installiert, dass sich der ausgefahrene Fokussiertubus minimal über der Salzoberfläche befunden hat. Da die Bandbelegung jedoch nicht konstant war, kam es schnell zum direkten Kontakt zwischen Fokussiertubus und Salz. Der Fokussiertubus wurde daraufhin noch tiefer eingetaucht, um ihn maximalen Bedingungen auszusetzen und absichtlich in vollem Kontakt mit dem Salz zu lassen.

Hierdurch sollte untersucht werden, ob es zu Salzanstauungen im Innenrohr kommt und ob sich äußere Anbackungen am Innenrohr gut durch den vorgesehenen Abstreifmechanismus entfernen lassen. Hierbei wurden mehrere Fokussiertubus-Salz-Kontaktzeiten vor der manuellen Betätigung des Abstreifmechanismus getestet.

Hierbei wurden mehrere zeitliche Abstände (wiederholt 1 Minute, wiederholt 5 Minuten, 1 Stunde, 1,5 Stunden) zwischen den Betätigungen des Abstreifmechanismus getestet.

### Beobachtungen nach wiederholtem, 1-minütigem Fokussiertubus-Salz-Kontakt (Eintauchdauer):

Der äußere Teil des Fokussiertubus, welcher im direkten Produktstromkontakt gestanden hatte, wies erste Salzanlagerungen auf, im Innenrohr und an der Innenrohrkante ist es jedoch zu keinen Anbackungen und Salzanstauungen gekommen. Nach Betätigung des Abstreifmechanismus könnten die äußeren Anlagerungen problemlos entfernt werden.

### Beobachtungen nach wiederholtem, 5-minütigem Fokussiertubus-Salz-Kontakt (Eintauchdauer):

Der äußere Teil des Fokussiertubus mit Produktstromkontakt hatte erneut Salzanlagerungen. An der Innenrohrkante waren nach dieser Zeit auch erste kleine Salzanbackungen sichtbar. Direkt im Innenrohr kam es jedoch erneut zu keinen Anbackungen und Salzanstauungen. Nach Betätigung des Abstreifmechanismus konnten auch in diesem Fall die äußeren Anlagerungen sowie die Anlagerungen an der Innenrohrkante gut entfernt werden.

### Beobachtungen bei einer zufällig aufgetretenen Salzproduktionsstörung:

Während der Testphase kam es bei der Salzförderung zu einer Verstopfung, so dass kurzfristig kein Siedesalz mehr auf dem Band gefördert wurde.

Als die Verstopfung behoben wurden, kam es zu großen Unregelmäßigkeiten in der Bandbelegung. Der manuelle Messtubus wurde hierbei jedoch absichtlich nicht in seiner Höhe verändert und diesen erschwerten Bedingungen ausgesetzt, um somit sein Verhalten bei einem solchen Produktionszustand zu testen. Hierbei konnte beobachtet werden, dass der Fokussiertubus z. T. bis auf Höhe des äußeren Abstreifers in den Produktstrom eingetaucht war.

Neben der unregelmäßigen Bandbelegung waren z. T. auch große Salzknollen auf dem Förderband, diese sind jedoch ohne Probleme am Messtubus abgeprallt und seitlich am Band weitergefördert worden, ohne vom Nasssalzband zu fallen.

Der Messtubus hatte nach dem tiefen Eintauchen in den Produktstrom und dem Kontakt mit Salzknollen erneut Kantenanbackungen außen und am Fokussiertubus. Diese konnten nach Betätigung des Abstreifmechanismus jedoch wiederum problemlos entfernt werden.

### Beobachtungen nach 1 und 1,5-stündigem Fokussiertubus-Salz-Kontakt:

Der äußere Teil des Fokussiertubus mit Produktstromkontakt hatte jeweils größere Salzanlagerungen, an der Innenrohrkante waren nach diesen Kontaktzeiten auch Salzanbackungen sichtbar. Diese waren aber nicht größer als bei einer Kontaktzeit von 5 Minuten, da sich die Kantenanbackungen durch den bewegten Förderprozess vermutlich immer wieder etwas gelöst haben. Direkt im Innenrohr kam es weder nach 1 Stunde, noch nach 1,5 Stunden zu Anbackungen und Salzanstauungen. Nach Betätigung des Abstreifmechanismus konnten auch nach diesen längeren Kontaktzeiten die äußeren Anlagerungen sowie die Anlagerungen an der Innenrohrkante entfernt werden. Nach Ausbau des Messtubus war ebenfalls zu erkennen, dass am angeschrägten hinteren Teil des Fokussiertubus keine Anbackungen vorhanden waren. Somit hat der vordere Fokussiertubusteil als eine Art Pflug fungiert und die angeschrägte hintere Tubusgeometrie vermutlich Salzanstauungen im inneren Tubusteil verhindert.

### Beispiel 2

Mit einem automatisierten Messtubus gemäß Figur 1 wurde ein mit Beispiel 1 vergleichbares, vorteilhaftes Messverhalten im automatisierten Betrieb gefunden.

## Patentansprüche

1. LIBS-Messtubus zum vertikalen Eintauchen in ein in einem horizontalen Strom bewegtes, zu analysierendes Material, speziell Schüttgut, insbesondere Roh-, Zwischen- und Endprodukte aus der Kali-, Magnesium- oder Stein- oder Siedesalzaufbereitung, umfassend:
einen Fokussiertubus (3), der sich vertikal erstreckt, innen hohl und zumindest am unteren Ende offen ist, so dass sich am unteren Ende eine Unterkante ausbildet, und der am oberen Ende einen Einlass zum Einkoppeln eines Laserstrahls und einen Auslass zum Auskoppeln eines Emissionsspektrums aufweist,
wobei der Messtubus so aufgebaut ist, dass im Fokussiertubus (3) der Laserstrahl auf das zu analysierende Material, speziell Schüttgut, insbesondere Roh-, Zwischen- und Endprodukte aus der Kali-, Magnesium- oder Stein- oder Siedesalzaufbereitung, fokussiert wird, so dass innerhalb des Fokussiertubus (3), ohne dass eine zusätzliche Streuung oder Ablenkung erfolgt, durch die Laserstrahlung ein Plasma des zu analysierenden Materials erzeugt wird und das Emissionsspektrum des zu analysierenden Materials durch das Innere des Fokussiertubus (3) zum Auslass zum Auskoppeln gelangt,
**gekennzeichnet dadurch, dass** der Messtubus Abstreifer (1,2) aufweist, die an der inneren und äußeren Fokussiertubuswand ringförmig, vorzugsweise auf derselben vertikalen Höhe am Fokussiertubus (3) anliegen, und gegenüber dem Fokussiertubus (3) vertikal verschiebbar angeordnet sind, so dass durch eine Relativbewegung des Fokussiertubus (3) gegenüber den Abstreifern (1,2) im unteren Bereich, innen und außen am Fokussiertubus (3) anhaftendes, zu analysierendes Material abgestreift werden kann.

2. Messtubus nach Anspruch 1, **dadurch gekennzeichnet, dass** der Messtubus einen Einlass zum Einspeisen von Inertgas, welches die Detektion der Spektren von Elementen, die im VUV-Bereich emittieren, vorzugsweise Schwefel, ermöglicht, aufweist.

3. Messtubus nach Anspruch 1 oder 2, **dadurch gekennzeichnet, dass** die Abstreifer (1,2) so am Fokussiertubus (3) anliegen, dass sie im Messbetrieb nicht in den horizontalen Strom des zu analysierenden Materials eintauchen.

4. Messtubus nach einem der Ansprüche 1 bis 3, **dadurch gekennzeichnet, dass** der Fokussiertubus (3) und die Abstreifer (1,2) rohrförmig sind.

5. Messtubus nach einem der Ansprüche 1 bis 4, **dadurch gekennzeichnet, dass** der Fokussiertubus (3) und die Abstreifer (1,2) einen kreisförmigen Querschnitt haben.

6. Messtubus nach einem der Ansprüche 1 bis 5, **dadurch gekennzeichnet, dass** das untere Ende des Fokussiertubus (3) abgeschrägt ist, so dass die Unterkante des Fokussiertubus (3) an der Anströmseite des Stroms des zu analysierenden Materials tiefer in diesen Strom eintaucht als an der Abströmseite.

7. Messtubus nach einem der Ansprüche 1 bis 6, **dadurch gekennzeichnet, dass** er eine, vorzugsweise pneumatische, Antriebseinheit für eine automatisierte Relativbewegung des Fokussiertubus (3) gegenüber den Abstreifern (1,2) aufweist.

8. Online-LIBS-Analyseeinheit, umfassend
einen LIBS-Messtubus nach einem der Ansprüche 1 bis 7,
eine Laserstrahlquelle,
eine Spektrometereinheit für die Erfassung des LIBS-Emissionsspektrums, mit Analyseoptik für den Spektralbereich von 170-590 nm und ggf. für einen Nachweis im IR-Bereich,
optische Bauelemente zum Einkoppeln des Laserstrahls in den Messtubus und Auskoppeln des Emissionsspektrums aus dem Messtubus,
eine Steuerelektronik (4) zum Betrieb der Laserstrahlquelle und Detektoreinheit sowie zur Messwerterfassung,
eine, vorzugsweise pneumatische, Antriebseinheit für eine automatisierte Relativbewegung des Fokussiertubus (3) gegenüber den Abstreifern (1,2),
eine Vorrichtung zum Einspeisen von Inertgas in den Messtubus, welches die Detektion der Spektren von Elemente, die im VUV-Bereich emittieren, vorzugsweise Schwefel, erst ermöglicht.

9. Analyseeinheit nach Anspruch 8, ferner umfassend ein Autofokus-System zur Anpassung des Messabstands zum zu analysierenden Material.

10. Analyseeinheit nach Anspruch 8 oder. 9, ferner umfassend eine Steuer- und Regeleinheit zur Automatisierung des Abstreifens durch eine, vorzugsweise pneumatische, Antriebseinheit für eine automatisierte Relativbewegung des Fokussiertubus (3) gegenüber den Abstreifern (1,2).

11. Verwendung eines Messtubus nach einem der Ansprüche 1 bis 7 oder einer Online-LIBS-Analyseeinheit nach einem der Ansprüche 8 bis 10 zur qualitativen und /oder quantitativen Online-Bestimmung einzelner oder mehrerer chemischer Elemente eines zu analysierenden Materials, das in einem horizontalen Strom am Messtubus vorbeibewegt wird.

12. Verwendung nach Anspruch 11, **dadurch gekennzeichnet, dass** es sich beim zu analysierenden Material um einen Feststoff, vorzugsweise ein Schüttgut, ein Gas, ein Gel, ein Sol, eine Dispersion, eine Flüssigkeit oder Gemische davon handelt.

13. Verwendung nach Anspruch 11 oder 12, **dadurch gekennzeichnet, dass** das zu analysierende Material ein Salz, vorzugsweise Roh-, Zwischen- oder Endprodukt aus der Kali-, Magnesium- oder Stein- oder Siedesalzaufbereitung, ist.

14. Verwendung nach Anspruch 13, **dadurch gekennzeichnet, dass** insbesondere der Schwefelgehalt des Salzes im Online-Betrieb unter Inertgasatmosphäre bestimmt wird.

15. Verfahren zur qualitativen und/oder quantitativen Online-Bestimmung einzelner oder mehrerer chemischer Elemente eines zu analysierenden Materials, insbesondere Roh-, Zwischen- oder Endprodukte aus der Kali-, Magnesium- oder Stein- oder Siedesalzaufbereitung, das in einem horizontalen Strom bewegt wird, mit einer Online-LIBS-Analyseeinheit nach einem der Ansprüche 8 bis 10, bei dem man den LIBS-Messtubus vertikal in ein in einem horizontalen Strom bewegtes, zu analysierendes Material eintaucht, mithilfe der Laserstrahlquelle einen LIBS-Laserstrahl erzeugt und im Fokussiertubus (3) auf das zu analysierende Material fokussiert,
so dass ein durch die Laserstrahlung erzeugtes Plasma des zu analysierenden Materials innerhalb des Messtubus gebildet wird und das Emissionsspektrum des zu analysierenden Materials durch das Innere des Fokussiertubus (3) zum Auslass zum Auskoppeln in die Detektoreinheit gelangt und dort eine Messwerterfassung erfolgt, wobei LIBS-Messungen im Online-Betrieb nacheinander durchgeführt werden, wobei während der LIBS-Messungen am Fokussiertubus (3) anhaftendes, zu analysierendes Material, vorzugsweise automatisiert, von diesem durch eine Relativbewegung des Fokussiertubus (3) gegenüber den Abstreifern (1,2) abgestreift wird.

16. Verfahren nach Anspruch 15, **dadurch gekennzeichnet, dass** die LIBS-Messung unter Inertgasatmosphäre durchgeführt wird, indem Inertgas in den Messtubus eingespeist wird.

17. Verfahren nach Anspruch 15 oder 16, **dadurch gekennzeichnet, dass** es sich beim zu analysierenden Material um einen Feststoff, speziell ein Schüttgut, ein Gas, ein Gel, ein Sol, eine Dispersion, eine Flüssigkeit oder Gemische davon handelt.

18. Verfahren nach einem der Ansprüche 15 bis 17, **dadurch gekennzeichnet, dass** das zu analysierende Material bevorzugt ein Salz, vorzugsweise speziell Schüttgut, insbesondere Roh-, Zwischen- oder Endprodukte aus der Kali-, Magnesium- oder Stein- oder Siedesalzaufbereitung, ist.

19. Verfahren nach Anspruch 18, **dadurch gekennzeichnet, dass** insbesondere der Schwefelgehalt des Salzes im Online-Betrieb unter Inertgasatmosphäre bestimmt wird.

## Claims

1. LIBS measurement tube for vertical immersion into a material to be analysed which is moved in a horizontal flow, especially bulk material, in particular raw materials, intermediate materials and end products from potash salt, magnesium salt or rock salt or boiling salt preparation, consisting of:
one focusing tube (3) which is
extended vertically, internally hollow and which is at a minimum open at the lower end, so that a lower edge develops at the lower end, and which indicates at the upper end an intake for the coupling of a laser beam and an outflow for the decoupling of an emission spectrum,
where the measurement tube is structured so that, in the focusing tube (3), the laser beam is focused onto the material to be analysed, especially bulk material, in particular raw materials, intermediate materials and end products from the potash salt, magnesium salt or rock salt or boiling salt preparation, so that, within the focusing tube (3), without any additional scattering or diversion being implemented, a plasma of the material to be analysed is generated by the laser irradiation and the emission spectrum of the material to be analysed taken through the interior of the focusing tube (3) to the outlet for decoupling,
**characterised in that** the measurement tube indicates stripper plates (1, 2), which are placed in annular arrangement on the inner and external focusing tube wall, preferably at the same vertical height, on the focusing tube (3), and are vertically displaceable with respect to the focusing tube so that, through a relative movement of the focusing tube with respect to the stripper plates (1.2) in the lower area, material to be analysed, which is adhering inside and outside on the focusing tube, can be stripped off.

2. Measurement tube according to Claim 1, **characterised in that** the measurement tube indicates an intake for the feeding of inert gas, which enables the detection of the spectra of elements which emit in the VUV range, preferably sulphur.

3. Measurement tube according to Claim 1 or 2, **characterised in that** the stripper plates are placed on the focusing tube so that, in test operation, they do not immerse into the horizontal flow of the material to be analysed.

4. Measurement tube according to one of the Claims 1 to 3, **characterised in that** the focusing tube and the stripper plates are tube-shaped.

5. Measurement tube according to one of the Claims of 1 to 4, **characterised in that** the focusing tube (3) and the stripper plates (1, 2) have a circular cross-section.

6. Measurement tube according to one of the Claims 1 to 5, **characterised in that** the lower end of the focusing tube (3) is bevelled, so that the lower edge of the focusing tube (3), at the flow-on side of the current of the material to be analysed, immerses more deeply into this flow than at the flow-off side.

7. Measurement tube according to one of the Claims 1 to 6, **characterised in that** it indicates one, preferably pneumatic, drive unit for an automated relative movement of the focusing tube (3) with respect to the stripper plates (1, 2).

8. Online LIBS analysis unit, consisting of
one LIBS measurement tube according to one of the Claims 1 to 7,
one laser beam source,
one spectrometer unit for the recording of the LIBS emission spectrum, with analysis optics for the spectral range 170 - 590 nm and, as appropriate, for a verification in the IR range,
optical modular elements for the coupling of the laser beam in the measurement tube and decoupling of the emission spectrum from the measurement tube,
one electronic control (4)
for the operation of the laser beam source and detector unit, as well as for the measured value recording,
one, preferably pneumatic, drive unit for an automated relative movement of the focusing tube (3) with respect to the stripper plates (1, 2),
one equipment item for the feeding of inert gas into the measurement tube, which first enables the detection of the spectra of elements which emit in the VUV range, preferably sulphur.

9. Analysis unit according to Claim 8, further including an auto-focus system for the adaptation of the measurement separation distance to the material to be analysed.

10. Analysis unit according to Claim 8 or 9, further including a control and regulation unit for the automation of the stripping by means of a, preferably pneumatic, drive unit for an automated relative movement of the focusing tube (3) with respect to the stripper plates (1, 2).

11. Utilisation of a measurement tube according to one of the Claims 1 to 7, or an online LIBS analysis unit according to one of the Claims 8 to 10, for the qualitative and/or quantitative online determination of individual or several chemical elements of a material to be analysed, which is moved in a horizontal flow past the measurement tube.

12. Utilisation according to Claim 11, **characterised in that**, in case of the material to be analysed, it involves solid matter, preferably a bulk material, a gas, a gel, a salt, a dispersion, a liquid or mixtures thereof.

13. Utilisation according to Claim 11 or 12, **characterised in that** the material to be analysed is a salt, preferably raw material, intermediate material or end product from the potash salt, magnesium salt or rock salt or boiling salt preparation.

14. Utilisation according to Claim 13, **characterised in that** in particular the sulphur content of the salt is determined in on-line operation under inert gas atmosphere.

15. Process for the qualitative and/or quantitative online determination of individual or several chemical elements of a material to be analysed, in particular raw materials, intermediate materials or end products from the potash salt, magnesium salt or rock salt or boiling salt preparation, which is moved in a horizontal flow, with an online LIBS analysis unit, according to one of the Claims 8 to 10, where the LIBS measurement tube is immersed vertically into a material to be analysed which is moved in a horizontal flow, a LIBS laser beam is generated with the aid of the laser beam source and is focused on the material to be analysed in the focusing tube (3),
so that a plasma, generated by means of the laser irradiation of the material to be analysed within the measurement tube, is formed, and the emission spectrum of the material to be analysed through the interior of the focusing tube (3) reaches the outflow to the decoupling in the detector unit and a measured value recording is implemented there, where
LIBS measurements are implemented one after each other in on-line operation, where, during LIBS measurements, material to be analysed which is adhering to the focusing tube (3), preferably automated, is stripped off through a relative movement of the focusing tube with respect to the stripper plates.

16. Process according to Claim 15, **characterised in that** the LIBS measurement is implemented under inert gas atmosphere, where inert gas is injected into the measurement tube.

17. Process according to Claim 15 or 16, **characterised in that**, in case of the material being analysed, it involves solid matter, especially a bulk material, a gas, a gel, a salt, a dispersion, a liquid or mixtures thereof.

18. Process according to one of the Claims 15 to 17, **characterised in that** the material to be analysed is preferably a salt, especially preferably a bulk material, in particular raw materials, intermediate materials or end products from the potash salt, magnesium salt or rock salt or boiling salt preparation

19. Process according to Claim 18, **characterised in that** the sulphur content of the salt is determined in particular in on-line operation under inert gas atmosphere.

## Revendications

1. Tube de mesure par LIBS, destiné à être plongé verticalement dans un matériau à analyser, déplacé dans un courant horizontal, en particulier un matériau en vrac, notamment des produits non manufacturés, produits intermédiaires et produits finis provenant du traitement de sel potassique, sel de magnésium, sel gemme ou sel raffiné, comprenant : un tube de focalisation (3), **caractérisé en ce que** le tube de mesure s'étend verticalement, est creux à l'intérieur et ouvert au moins à l'extrémité inférieure de façon à former une arête inférieure à l'extrémité inférieure, **en ce que** le tube de mesure présente, à l'extrémité supérieure, une entrée pour l'injection d'un rayon laser et une sortie pour un spectre d'émission, et **caractérisé en ce que** le tube de mesure est conçu de sorte que, à l'intérieur de ce dernier, le rayon laser soit focalisé sur le matériau à analyser, en particulier un matériau en vrac, notamment des produits non manufacturés, produits intermédiaires et produits finis provenant du traitement de sel potassique, sel de magnésium, sel gemme ou sel raffiné, sans nécessiter cependant une dispersion et une déviation supplémentaires, de façon à générer un plasma du matériau à analyser à l'intérieur du tube de mesure par l'intermédiaire du rayon laser et de sorte que le spectre d'émission du matériau à analyser passe à travers l'intérieur du tube de mesure par la sortie pour son découplage. L'invention est **caractérisée en outre en ce que** des éléments racleurs (1, 2) du tube de mesure prennent appui de manière annulaire, de préférence à la même hauteur, sur le tube de focalisation (3) au niveau de la paroi interne et de,la paroi externe de ce dernier, ces éléments racleurs étant disposés de manière à pouvoir coulisser verticalement de façon à permettre l'élimination par raclage du matériau à analyser, adhérant dans la zone inférieure à l'intérieur et à l'extérieur du tube de focalisation (3), sous l'effet d'un mouvement relatif du tube de focalisation (3) par rapport aux éléments racleurs (1, 2).

2. Tube de mesure selon la revendication 1, **caractérisé en ce que** le tube de mesure possède une entrée pour l'alimentation de gaz inerte qui rend possible la détection de spectres d'éléments qui émettent dans la gamme VUV (rayonnement ultraviolet au vide), de préférence le soufre.

3. Tube de mesure selon la revendication 1 ou 2, **caractérisé en ce que** les éléments racleurs (1,2) soient placés dans le tube de focalisation (3) de telle sorte qu'ils ne plongent pas en mode de mesure dans le flux horizontal du matériau à analyser.

4. Tube de mesure selon l'une des revendications 1 à 3, **caractérisé en ce que** le tube de focalisation (3) et les éléments racleurs (1,2) possèdent une forme tubulaire.

5. Tube de mesure selon l'une des revendications 1 à 3, **caractérisé en ce que** le tube de focalisation (3) et les éléments racleurs (1,2) possèdent une section circulaire.

6. Tube de mesure selon l'une des revendications 1 à 5, **caractérisé en ce que** l'extrémité inférieure du tube de focalisation (3) soit inclinée afin que l'arête inférieure du tube de focalisation (3) soit plongée plus profondément sur le côté en amont du courant du matériau à analyser que sur son côté en aval.

7. Tube de mesure selon l'une des revendications 1 à 6, **caractérisé en ce qu'**il possède une unité d'entraînement, de préférence pneumatique, pour un mouvement automatique relatif du tube de focalisation (3) par rapport aux éléments racleurs.

8. Unité d'analyse LIBS en ligne, comprenant un tube de mesure LIBS selon l'une des revendications 1 à 7, une source de rayonnement laser, une unité de spectromètre pour la détection du spectre d'émission de LIBS, avec
une optique d'analyse de l'optique pour la gamme spectrale de 170 à 590 nm et, le cas échéant, pour une certification dans la gamme IR, des composants optiques pour l'injection d'un rayon laser dans le tube de mesure et une sortie du tube de mesure pour le découplage d'un spectre d'émission, une électronique de commande (4) pour l'opération de la source du rayon laser et une unité de détection, ainsi qu'une unité d'entraînement, de préférence pneumatique pour un mouvement automatique relatif du tube de focalisation (3) par rapport aux éléments racleurs, un dispositif pour l'alimentation de gaz inerte qui rende possible la détection de spectres d'éléments qui émettent dans la gamme VUV (rayonnement ultraviolet du vide), de préférence le soufre.

9. Unité d'analyse selon la revendication 8, comprenant un système autofocus pour adapter la distance de mesure par rapport au matériau à analyser.

10. Unité d'analyse selon la revendication 8 ou 9, comprenant également une unité de commande et de régulation pour l'automatisation du raclage à travers une unité d'entraînement, de préférence pneumatique, pour un mouvement relatif automatique du tube de focalisation (3) par rapport aux éléments racleurs (1, 2).

11. Utilisation d'un tube de mesure selon l'une des revendications 1 à 7 ou d'une unité d'analyse LIBS en ligne selon l'une des revendications 8 à 10 pour la détermination en ligne qualitative ou quantitative d'un ou plusieurs éléments chimiques d'un matériau à analyser, qui passe dans un flux horizontal par le tube de mesure.

12. Utilisation selon la revendication 11, **caractérisée en ce qu'**il s'agit dans le matériau à analyser d'un matériau solide, de préférence un matériau en vrac, d'un gaz, d'un gel, d'un sol, d'une dispersion, d'un liquide ou d'un mélange entre eux.

13. Utilisation selon la revendication 11 ou 12, **caractérisée en ce que** le matériau à analyser est un sel, de préférence des produits non manufacturés, produits intermédiaires et produits finis provenant du traitement de sel potassique, sel de magnésium, sel gemme ou sel raffiné.

14. Utilisation selon la revendication 13, **caractérisée en ce que**, notamment, la teneur en soufre du sel dans le fonctionnement en ligne est déterminée sous une atmosphère de gaz inerte.

15. Méthode pour la détermination en ligne qualitative ou quantitative d'un ou plusieurs éléments chimiques d'un matériau à analyser, de préférence des produits non manufacturés, produits intermédiaires et produits finis provenant du traitement de sel potassique, sel de magnésium, sel gemme ou sel raffiné, qui est déplacé dans un courant horizontal, avec une unité d'analyse en ligne LIBS selon l'une des revendications 8 à 10, **caractérisée en ce que** le tube de mesure LIBS est plongé verticalement dans un matériau à analyser, déplacé dans un courant horizontal, avec l'aide de la source de rayonnement laser, un rayon laser LIBS est généré et est focalisé sur le matériau à analyser à l'intérieur du tube de focalisation (3) de façon à générer un plasma du matériau à analyser à l'intérieur du tube de mesure par l'intermédiaire du rayon laser et de sorte que le spectre d'émission du matériau à analyser passe à travers l'intérieur du tube de focalisation (3) par la sortie pour son découplage dans l'unité de détection, et qu'une saisie des valeurs de mesure y ait lieu, avec des mesures de LIBS en ligne effectuées successivement, et de manière à permettre l'élimination par raclage du matériau à analyser, adhérant au tube de focalisation (3), sous l'effet d'un mouvement relatif, de préférence automatique, du tube de focalisation (3) par rapport aux éléments racleurs (1, 2).

16. Méthode selon la revendication 15, **caractérisée en ce que** la mesure LIBS soit réalisée sous une atmosphère de gaz inerte, en injectant le gaz inerte dans le tube de mesure.

17. Méthode selon la revendication 15, **caractérisée en ce qu'**il s'agit dans le matériau à analyser d'un matériau solide, de préférence un matériau en vrac, d'un gaz, d'un gel, d'un sol, d'une dispersion, d'un liquide ou d'un mélange entre eux.

18. Méthode selon l'une des revendications 15 à 17, **caractérisée en ce que** le matériau à analyser est un sel, de préférence des produits non manufacturés, produits intermédiaires et produits finis provenant du traitement de sel potassique, sel de magnésium, sel gemme ou sel raffiné.

19. Méthode selon la revendication 18, **caractérisée en ce que**, notamment, la teneur en soufre du sel dans le fonctionnement en ligne est déterminée sous une atmosphère de gaz inerte.
